# EUROPEAN PATENT SPECIFICATION

(11) **EP 3 266 596 B1**
(45) Date of publication and mention of the grant of the patent: **08.12.2021**
(21) Application number: 16178028.3
(22) Date of filing: 05.07.2016
(51) Int. Cl.: B29C 70/50, B29B 17/00, C08J 11/06, B29C 70/18, B29B 17/04, C08J 5/24, B29C 70/46

(54) **A METHOD FOR PRODUCING A BULK MOULDING COMPOUND OR A SHEET MOULDING COMPOUND FROM PRE-IMPREGNATED REINFORCEMENT FIBERS**
VERFAHREN ZUR HERSTELLUNG EINER BULK MOULDING COMPOUND ODER EINER SHEET MOULDING COMPOUND AUS VORIMPRÄGNIERTEN VERSTÄRKUNGSFASERN
PROCÉDÉ DE PRODUCTION D'UN COMPOSÉ À MOULER EN VRAC OU D'UN COMPOSÉ À MOULER EN FEUILLE À PARTIR DE FIBRES DE RENFORCEMENT PRÉ-IMPRÉGNÉES

(43) Date of publication of application: 10.01.2018
(73) Proprietor: Airbus Operations GmbH, 21129 Hamburg (DE)
(72) Inventor: WITTE, Tassilo, 21129 Hamburg (DE); OTTE, Bernd, 21717 Fredenbeck (DE)
(74) Representative: Schicker, Silvia

(56) References cited:
- EP-A1- 1 563 974
- EP-A2- 0 518 004
- CN-A- 102 660 148
- GB-A- 2 453 308
- US-A1- 2007 057 404
- US-A1- 2016 052 175
- GAURAV NILAKANTAN ET AL: "Reuse and upcycling of aerospace prepreg scrap and waste", REINFORCED PLASTICS., vol. 59, no. 1, 1 January 2015 (2015-01-01), pages 44-51, XP055312047, US ISSN: 0034-3617, DOI: 10.1016/j.repl.2014.12.070
- Aeronautic: "ENVIRONMENTAL TECHNOTES ENVIRONMENTAL TECHNOTES VOLUME 8, NUMBER 4 Composite Recycling and Disposal An Environmental R&D Issue", , 1 November 2003 (2003-11-01), XP055330717, Retrieved from the Internet: URL:http://www.boeingsuppliers.com/environ mental/TechNotes/TechNotes2003-11.pdf

## Description

The invention relates to a method for producing a bulk moulding compound or a sheet moulding compound from pre-impregnated reinforcement fibers. The invention further relates to a bulk moulding compound or a sheet moulding compound produced by this method. The invention further relates to a method for producing a composite material and a method for utilizing the remainder of pre-impregnated reinforcement fibers. The disclosure also relates to a composite material produced by the methods.

US 2016/052175 A1 discloses a method for recycling reinforcement fibers by powdering a thermoplastic binder applicator, melt impregnating the thermoplastic material and cutting the impregnated scrap material into substantially uniform particles of flakes.

EP 0 518 004 A2 discloses a method in which fiber reinforced thermoplastic materials are cut and mixed with a Novolak powder.

During manufacture of aircraft, composite materials are frequently deployed. The aircraft components from composite materials are usually manufactured from semi-finished composite materials, which frequently consist of so-called prepregs, i.e. of pre-impregnated reinforcement fibers, e.g. carbon fiber reinforced plastics (CFRP), which may be arranged in several stacked material layers. The reinforcement fibers may be present as uni-directional layer(s), as fabrics or as laid webs. For the manufacture of a composite material component from a semi-finished composite material, the matrix surrounding the reinforcement fibers can be cured by using temperature and pressure. Frequently a pultrusion process is applied, which is a continuous process for manufacture of fiber-reinforced composite materials. The matrix may, for example, comprise a material that can be liquefied through heating. The semi-finished composite material may consist of a laminate of several material layers. Such laminates can be manufactured via automated techniques (e.g. ATL, (Automated Tape Laying), AFP (Automated Fiber Placement)) or manual lamination techniques.

The pre-impregnated reinforcement fibers are frequently applied in form of tubes or tapes, wherein the tubes or tapes are wound up on spools. A plurality of spools with pre-impregnated reinforcement fibers can, e.g., be processed in a fibre-lay-up process (FLU) into composites parts such as T-stringers, which are used in aircraft construction. In order to prevent unnecessary interruptions and delays of the manufacturing process, the spools are exchanged, before they are depleted, i.e. before the spool material has been completely used. For example several spools are used in a FLU-process and, once one of the spools is depleted, the process is stopped and all spools are exchanged by new ones. The exchanged spools still have unused remainder material. This remainder material (or rest material) on the spools is usually disposed and not utilized in further processes.

Bulk moulding compounds (BMC) or sheet moulding compounds (SMC) are ready to mold, pre-impregnated reinforment fibre materials primarily used in injection moulding and compression moulding for preparation of composite materials. Bulk moulding compounds are manufactured e.g. by mixing strands of chopped glass fibers in a mixer with polyester resin and additives. The glass fibers in bulk moulding compounds result in better strength properties than standard thermoplastic products.

Bulk moulding compounds or sheet moulding compounds are usually made from dry fibres that are mixed with additives to achieve a well processable moulding compound to be used in injection or compression moulding processes. In case the remainder of pre-impregnated reinforcement fibers should be used, it would be necessary to either remove the resin from the fibres, e.g. via pyrolysis and use the raw fibres or cure all pre-impregnated reinforcement fibers, grind the fibre-plastic mix and use it as filler in the bulk moulding compounds or a sheet moulding compounds.

Pre-impregnated reinforcement fibers materials, for example originating from the above-described remainder material, could be used in bulk moulding compounds or sheet moulding compounds. However, in order to be used in bulk moulding compounds or sheet moulding compounds, the pre-impregnated reinforcement fibers have to be cut down into smaller pieces, e.g. smaller laminates. During the cutting, the material tends to stick to the blade and the cut pieces tend to stick together, impeding a further processing thereof.

EP 1 563 974 A1 discloses prepregs and a process for manufacturing these, wherein a reinforcing fiber sheet is impregnated with a matrix resin and at least one surface of the fiber layer consists of a resin impregnated part and a non impregnated part.

The invention has the objective of providing a method for method for producing a bulk moulding compound or a sheet moulding compound from pre-impregnated reinforcement fibers. In the invention, the sticking together of cuts or strips of pre-impregnated reinforcement fibers is prevented. The invention also allows utilizing remainder material of pre-impregnated reinforcement fibers from other processes, which would otherwise be disposed. Further, the invention has the objective of providing a bulk moulding compound or a sheet moulding compound by using pre-impregnated reinforcement fibers.

This objective is solved by a method according to claim 1, a bulk moulding compound or a sheet moulding compound according to claim 10 and a method for utilizing the remainder of pre-impregnated reinforcement fibers according to claim 12.

A method for producing a bulk moulding compound or a sheet moulding compound from pre-impregnated reinforcement fibers comprises a step of powdering a powdery substance on at least one surface of pre-impregnated reinforcement fibers.

The pre-impregnated reinforcement fibers may comprise carbon fibers or glass fibers and a resin such as epoxy, other thermoset or thermoplastic polymers, such as polyester, vinyl ester or nylon. The pre-impregnated reinforcement fibers may be in form of laminates, tubes or tapes. Preferably, the pre-impregnated reinforcement fibers are present as tapes. These tapes may originate from spools which were used in an upstream manufacturing process and on which remainder material of pre-impregnated reinforcement fibers is present, which would be disposed. This remainder material can be utilized in the preparation of bulk moulding compounds and sheet moulding compounds and thus in the production of composite materials. Bulk moulding compounds and sheet moulding compounds may comprise pre-impregnated reinforcement fibers, additional resin and additives and can be used for the production of composite materials, e.g. by moulding. The main difference between bulk moulding compounds and sheet moulding compounds is the final product, as the bulk moulding compounds are provided as bulk material, while the sheet moulding compounds are provided as sheets.

The powdery substance may be any substance that is in powder form. The substance is preferably selected from a substance that is commonly added as additive in the compounding into a bulk moulding compound or a sheet moulding compound. The powdery substance preferably comprises calcium carbonate, aluminum trihydrate or magnesium hydroxide.

The powdering according to the present invention encompasses any process by which a powdery substance can be powdered, coated or dusted on at least one surface of pre-impregnated reinforcement fibers. The powdery substance is any substance that prevents sticking together of pre-impregnated reinforcement fibers. The pre-impregnated reinforcement fibers may, for example, be present as laminates of pre-impregnated reinforcement fibers. Without wishing to be bound by theory, it is believed that the powdery substance deposits on the resin on the surface of the laminates and reduces or completely removes the adhesiveness/tackiness of the resin on the surface. Therefore, surfaces of different laminates do not stick together and can easily be processed into a bulk moulding compound or a sheet moulding compound.

In order to prepare a bulk moulding compound or a sheet moulding compound, the powdered pre-impregnated reinforcement fibers are compounded with additives. The compounding and the additives used in the compounding depend on the properties the final composite material produced by the bulk moulding compound or a sheet moulding compound should have and are known to the skilled person.

The method for producing a bulk moulding compound or a sheet moulding compound from pre-impregnated reinforcement fibers may comprise a step of powdering the powdery substance on at least one surface of laminates of pre-impregnated reinforcement fibers. Here, the pre-impregnated reinforcement fibers are present as laminates, i.e. as multi-layered material. The laminates may be present as tapes.

The method for producing a bulk moulding compound or a sheet moulding compound from pre-impregnated reinforcement fibers further comprises a step of cutting the powdered laminates of pre-impregnated reinforcement fibers into a plurality of cut laminates. The cut laminates are smaller than the uncut laminate. The cut laminates can also be considered as cuts or pieces of laminates.

Due to the powdery substance that was powdered or dusted onto the laminates, the cut laminates do not stick together and can easily be processed.

The cut laminates are preferably of a substantially uniform size of e.g. 1-20 mm length, preferably of 10 mm length. Such cut-offs of a uniform size can be used for reproducible preparation of a bulk moulding compound or a sheet moulding compound having homogeneous properties.

The method for producing a bulk moulding compound or a sheet moulding compound from pre-impregnated reinforcement fibers may comprise the steps of
- stacking a plurality of laminates of pre-impregnated reinforcement fibers into a stack,
- powdering the powdery substance on at least one surface of the stack, and
- cutting the powdered stack into a plurality of cut stacks.

The stacking of a plurality of laminates of pre-impregnated reinforcement fibers into a stack improves the efficiency of the method, as a plurality of laminates can be processed in parallel, i.e. powdered and cut simultaneously. The cut stacks each comprise a plurality of cut laminates having substantially the same size. These cut stacks can easily be further processed into a bulk moulding compound or a sheet moulding compound by compounding the stacks with additives.

The method for producing a bulk moulding compound or a sheet moulding compound from pre-impregnated reinforcement fibers may further comprise a step of powdering the powdery substance onto the plurality of cut laminates or cut stacks. This powdering is thus performed after the laminates or stacks have been cut.

In the first powdering described above, only the exposed surfaces of the laminates or stacks might be powdered with the powdery substance. In case of stacked tapes, only the tapes on the outside of the stacks would be powdered with the powdery material. Upon cutting the stacks, new surfaces are created, which are not covered by powdery material. Accordingly, even though parts of the stacks are covered by powdery material, other parts may not be covered and may tend to stick together. Accordingly, a second powdering step might be applied in order to also cover the remainder surfaces of the stacks. Accordingly, by powdering the powdery substance onto the plurality of cut laminates or cut stacks, it is ensured that no surfaces of the cut laminates or cut stacks stick together, thus further improving the processibility of the material.

The method for producing a bulk moulding compound or a sheet moulding compound from pre-impregnated reinforcement fibers may further comprise a step of compounding the cut laminates or cut stacks with additives.

The compounding itself is known to the skilled person and can be done by any technique known in the art. The additives can be used to modify the flow behavior of the bulk moulding compound or sheet moulding compound. The amount of additives and the type of additives can be selected according to the desired properties of the composite material that is to be produced with the bulk moulding compound or sheet moulding compound. The additives can be similar or identical to the powdery substance used for powdering described above. Common additives are calcium carbonate (e.g. chalk), additional resin or polymer (e.g. epoxy), flow enhancers, initiators, pigments, etc.

In the method for producing a bulk moulding compound or a sheet moulding compound from pre-impregnated reinforcement fibers, the powdery substance may comprise compounding additives. As described above, the powdery substance may be identical to at least one of the additives added during the compounding step. Accordingly, for example, a small amount of calcium carbonate that would be added during the compounding, can be powdered onto the pre-impregnated reinforcement fibers and this small amount of calcium carbonate can be subtracted from the amount of calcium carbonate added during the compounding. For example, 5% by volume of the calcium carbonate that would be added during the compounding can be used for powdering and only 95% by volume of the calcium carbonate that would be added during the compounding is indeed added during the compounding. In other words, the amount of powdery substance powdered onto the pre-impregnated reinforcement fibers and the amount of additive (identical to said powdery substance) used during compounding equal the amount of additive that would be used in a normal compounding process.

In the method for producing a bulk moulding compound or a sheet moulding compound from pre-impregnated reinforcement fibers, the powdery substance preferably comprises calcium carbonate, aluminum trihydrate or magnesium hydroxide.

Calcium carbonate, e.g. provided as chalk is the most common additive and enhances the flow behavior of the bulk moulding compound or sheet moulding compound. Accordingly, the powdery substance preferably comprises calcium carbonate.

A bulk moulding compound or a sheet moulding compound is produced by a method as described above.

The bulk moulding compound or a sheet moulding compound may comprise 10-50% by volume fibres, 20-60% by volume resin or polymer and 10-50% by volume additives. The bulk moulding compound or a sheet moulding compound preferably comprises 30% by volume fibres, 40% by volume resin or polymer and 30% by volume additives.

The additives may comprise calcium carbonate (e.g. chalk), additional resin or polymer (e.g. epoxy), flow enhancers, initiators, pigments, etc. The additives preferably comprise calcium carbonate, aluminum trihydrate or magnesium hydroxide. Part of the additives might have been added to the bulk moulding compound or sheet moulding compound before the compounding, i.e. before the cutting of pre-impregnated reinforcement fibers into smaller pieces, as described above.

A method for producing a composite material, comprises a step of moulding a bulk moulding compound or a sheet moulding compound prepared as described above into a composite material. Preferred moulding processes are injection moulding and compression moulding.

The method for producing a composite material may comprise the steps of
- powdering the powdery substance on at least one surface of laminates of pre-impregnated reinforcement fibers,
- cutting the powdered laminates into a plurality of cut laminates,
- optionally, powdering the powdery substance on at least one surface of the plurality of cut laminates,
- compounding the cut laminates with additives,
- moulding the compounded cut laminates.

The above-described method steps are preferably performed in this sequence.

The method for producing a composite material may comprise the steps of
- stacking a plurality of laminates of pre-impregnated reinforcement fibers into a stack,
- powdering the powdery substance on at least one surface of the stack,
- cutting the powdered stack into a plurality of cut stacks,
- optionally, powdering the powdery substance on at least one surface of the plurality of cut stacks,
- compounding the cut stacks with additives,
- moulding the compounded cut stacks.

The above-described method steps are preferably performed in this sequence.

The method may thus comprise two steps of powdering the powdery substance onto laminates or stacks, once before the laminates or stacks are cut and once the laminates or stacks have been cut, in order to ensure that all surfaces of the cut laminates or stacks are covered by the powdery substance. Accordingly, sticking together of the cut laminates or stacks is prevented and processibility thereof is ensured.

A method for utilizing the remainder of pre-impregnated reinforcement fibers comprises a step of producing a bulk moulding compound or a sheet moulding compound from pre-impregnated reinforcement fibers as described above or producing a composite material as described above.

The remainder material may originate from an upstream process, where pre-impregnated reinforcement fibers were used to manufacture a composite material, such as a T-stringer. The remainder material may originate from tapes of pre-impregnated reinforcement fibers that were wound on spools, which were exchanged before being depleted. The method thus allows utilizing pre-impregnated reinforcement fibers that would otherwise be disposed. The powdering of the pre-impregnated reinforcement fibers allows processing them, e.g. by cutting into pieces of substantially uniform size and mixing these pieces with additives used in the manufacture of bulk moulding compounds or sheet moulding compounds.

The cutting in the above-described methods may, for example, be performed with a cutting knife.

In all the above-described methods, the excess powdery substance that was powdered onto the pre-impregnated reinforcement fibers, but did not adhere thereto, can be collected and be reused in a next powdering step or during the compounding of the powdered pre-impregnated reinforcement fibers with additives.

A composite material is prepared by a method as described above. The composite material is preferably a part that is used in an aircraft.

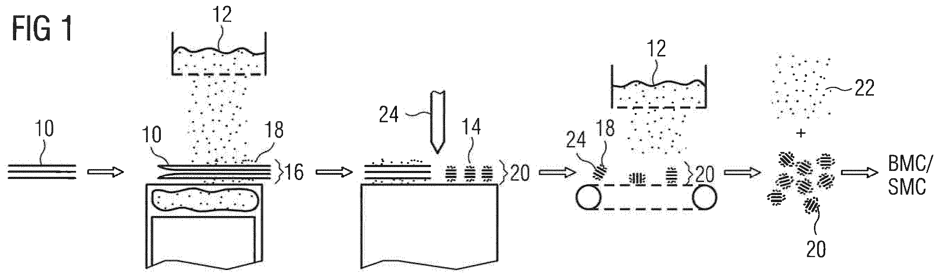

Preferred embodiments of the invention will be described in further detail in the following, with reference to
- Figure 1: which shows a schematic view of a method for producing a bulk moulding compound or a sheet moulding compound.

Figure 1 shows a method for producing a bulk moulding compound or a sheet moulding compound from pre-impregnated reinforcement fibers 10. The method comprises a step of powdering the powdery substance 12 onto pre-impregnated reinforcement fibers 10.

The pre-impregnated reinforcement fibers 10 may comprise carbon fibers or glass fibers and a resin such as epoxy, other thermoset or thermoplastic polymers, such as polyester, vinyl ester or nylon. The pre-impregnated reinforcement fibers 10 may be in form of laminates, tubes or tapes. Preferably, the pre-impregnated reinforcement fibers 10 are present as tapes. These tapes may originate from spools which were used in an upstream manufacturing process and on which remainder material of pre-impregnated reinforcement fibers 10 is present, which would be disposed. This remainder material can be utilized in the preparation of bulk moulding compounds and sheet moulding compounds and thus in the production of composite materials.

Bulk moulding compounds and sheet moulding compounds may comprise pre-impregnated reinforcement fibers 10, additional resin and additives and can be used for the production of composite materials, e.g. by moulding. The main difference between bulk moulding compounds and sheet moulding compounds is the final product, as the bulk moulding compounds are provided as bulk material, while the sheet moulding compounds are provided as sheets.

The powdery substance 12 may be any substance that is in powder form. The powdery substance 12 is preferably selected from a substance that is commonly added as additive in the compounding into a bulk moulding compound or a sheet moulding compound. The powdery substance 12 preferably comprises calcium carbonate, aluminum trihydrate or magnesium hydroxide.

The powdering according to the present invention encompasses any process by which the powdery substance can be powdered, coated or dusted onto pre-impregnated reinforcement fibers 10. The powdering according to the present invention thus encompasses any process by which a powdery substance can be powdered, coated or dusted on onto pre-impregnated reinforcement fibers 10. The powdery substance 12 is any substance that prevents sticking together of pre-impregnated reinforcement fibers 10. The pre-impregnated reinforcement fibers 10 may for example be present as laminates of pre-impregnated reinforcement fibers 10. Without wishing to be bound by theory, it is believed that the powdery substance deposits on the resin on the surface of the laminates and reduces or completely removes the adhesiveness/tackiness of the resin on the surface. Therefore, surfaces of different laminates do not stick together and can easily be processed into a bulk moulding compound or a sheet moulding compound.

In order to prepare a bulk moulding compound or a sheet moulding compound, the powdered pre-impregnated reinforcement fibers 10 are compounded with additives 22. The compounding and the additives 22 used in the compounding depend on the properties the final composite material produced by the bulk moulding compound or a sheet moulding compound should have and are known to the skilled person.

The method for producing a bulk moulding compound or a sheet moulding compound from pre-impregnated reinforcement fibers 10 may further comprise a step of powdering the powdery substance 12 onto at least one surface 18 of laminates of pre-impregnated reinforcement fibers 10. Here, the pre-impregnated reinforcement fibers 10 are present as laminates, i.e. as multi-layered material. The laminates may be present as tapes.

The method for producing a bulk moulding compound or a sheet moulding compound from pre-impregnated reinforcement fibers 10 may further comprise a step of cutting the powdered laminates of pre-impregnated reinforcement fibers 10 into a plurality of cut laminates 14. The cut laminates 14 are smaller than the uncut laminate. The cut laminates 14 can also be considered as cuts or pieces of laminates.

Due to the powdery substance 12 that was powdered or dusted onto the laminates, the cut laminates 14 do not stick together and can easily be processed.

The cut laminates 14 are preferably of a substantially uniform size of e.g. 1-20 mm length, preferably of 10 mm length. Such cut-offs of a uniform size may be used for reproducible preparation of a bulk moulding compound or a sheet moulding compound having homogeneous properties.

The method for producing a bulk moulding compound or a sheet moulding compound from pre-impregnated reinforcement fibers 10 may comprise the steps of
- stacking a plurality of laminates of pre-impregnated reinforcement fibers 10 into a stack 16,
- powdering the powdery substance 12 on at least one surface 18 of the stack 16, and
- cutting the powdered stack into a plurality of cut stacks 20.

The stacking of a plurality of laminates of pre-impregnated reinforcement fibers 10 into a stack 16 improves the efficiency of the method, as a plurality of laminates may be processed in parallel, i.e. powdered and cut simultaneously. The cut stacks 20 each comprise a plurality of cut laminates 14 having substantially the same size. These cut stacks can easily be further processed into a bulk moulding compound or a sheet moulding compound by compounding the stacks with additives.

The method for producing a bulk moulding compound or a sheet moulding compound from pre-impregnated reinforcement fibers 10 may further comprise a step of powdering the powdery substance 12 onto the plurality of cut laminates 14 or cut stacks 20. This powdering is thus performed after the laminates or stacks 16 have been cut.

In the first powdering described above, only the exposed surfaces 18 of the laminates or stacks 16 might be powdered with the powdery substance. In case of stacked tapes, only the tapes on the outside of the stacks would be powdered with the powdery material. Upon cutting the stacks, new surfaces 24 are created, which are not covered by powdery material 12. Accordingly, even though parts of the stacks are covered by powdery material, other parts may not be covered and may tend to stick together. Accordingly, a second powdering step might be applied in order to also cover the remainder surfaces of the cut stacks 20. Accordingly, by powdering the powdery substance 12 onto the plurality of cut laminates 14 or cut stacks 20, it is ensured that no surfaces of the cut laminates 14 or cut stacks 20 stick together, thus further improving the processibility of the material.

The method for producing a bulk moulding compound or a sheet moulding compound from pre-impregnated reinforcement fibers 10 may further comprise a step of compounding the cut laminates 14 or cut stacks 20 with additives 22.

The compounding itself is known to the skilled person and can be done by any technique known in the art. The additives 22 can be used to modify the flow behavior of the bulk moulding compound or sheet moulding compound. The amount of additives and the type of additives can be selected according to the desired properties of the composite material that is to be produced with the bulk moulding compound or sheet moulding compound. The additives 22 may be similar or identical to the powdery substance used for powdering described above. Common additives 22 are calcium carbonate (e.g. chalk), additional resin or polymer (e.g. epoxy), flow enhancers, initiators, pigments, etc.

In the method for producing a bulk moulding compound or a sheet moulding compound from pre-impregnated reinforcement fibers 10, the powdery substance 12 may comprise compounding additives 22. As described above, the powdery substance 12 may be identical to at least one of the additives 22 added during the compounding step. Accordingly, for example, a small amount of calcium carbonate that would be added during the compounding, can be powdered onto the pre-impregnated reinforcement fibers 10 and this small amount of calcium carbonate can be subtracted from the amount of calcium carbonate added during the compounding. For example, 5% by volume of the calcium carbonate that would be added during the compounding can be used for powdering and only 95% by volume of the calcium carbonate that would be added during the compounding is indeed added during the compounding. In other words, the amount of powdery substance powdered onto the pre-impregnated reinforcement fibers 10 and the amount of additive 22 (identical to said powdery substance 12) used during compounding equal the amount of additive 22 that would be used in a normal compounding process.

In the method for producing a bulk moulding compound or a sheet moulding compound from pre-impregnated reinforcement fibers 10, the powdery substance 12 preferably comprises calcium carbonate, aluminum trihydrate or magnesium hydroxide.

Calcium carbonate, e.g. provided as chalk is the most common additive and enhances the flow behavior of the bulk moulding compound or sheet moulding compound. Accordingly, the powdery substance preferably comprises calcium carbonate.

A bulk moulding compound or a sheet moulding compound is produced by a method as described above.

The bulk moulding compound or a sheet moulding compound may comprise 10-50% by volume fibres, 20-60% by volume resin or polymer and 10-50% by volume additives 22. The bulk moulding compound or a sheet moulding compound preferably comprises 30% by volume fibres, 40% by volume resin or polymer and 30% by volume additives 22.

The additives 22 may comprise calcium carbonate (e.g. chalk), additional resin or polymer (e.g. epoxy), flow enhancers, initiators, pigments, etc. The additives preferably comprise calcium carbonate, aluminum trihydrate or magnesium hydroxide. Part of the additives might have been added to the bulk moulding compound or sheet moulding compound before the compounding, i.e. before the cutting of pre-impregnated reinforcement fibers 10 into smaller pieces, as described above.

A method for producing a composite material, comprises a step of moulding a bulk moulding compound or a sheet moulding compound prepared as described above into a composite material. Preferred moulding processes are injection moulding and compression moulding.

The method for producing a composite material may comprise the steps of
- powdering the powdery substance 12 on at least one surface of laminates of pre-impregnated reinforcement fibers 10,
- cutting the powdered laminates into a plurality of cut laminates 14,
- optionally, powdering the powdery substance 12 on at least one surface of the plurality of cut laminates 14,
- compounding the cut laminates 14 with additives 22,
- moulding the compounded cut laminates.

The above-described method steps are preferably performed in this sequence.

The method for producing a composite material may comprise the steps of
- stacking a plurality of laminates of pre-impregnated reinforcement fibers 10 into a stack 16,
- powdering the powdery substance 12 on at least one surface 18 of the stack 16,
- cutting the powdered stack 16 into a plurality of cut stacks 20,
- optionally, powdering the powdery substance 12 onto the plurality of cut stacks 20,
- compounding the cut stacks 20 with additives 22,
- moulding the compounded cut stacks.

The above-described method steps are preferably performed in this sequence.

The method may thus comprise two steps of powdering the powdery substance 12 onto laminates or stacks 20, once before the laminates or stacks are cut and once the laminates or stacks have been cut, in order to ensure that all surfaces of the cut laminates or stacks are covered by the powdery substance. Accordingly, sticking together of the cut laminates or stacks is prevented and processibility thereof is ensured.

A method for utilizing the remainder of pre-impregnated reinforcement fibers 10 comprises a step of producing a bulk moulding compound or a sheet moulding compound from pre-impregnated reinforcement fibers 10 as described above or producing a composite material as described above.

The remainder material may originate from an upstream process, where pre-impregnated reinforcement fibers 10 were used to manufacture a composite material, such as a T-stringer. The remainder material may originate from tapes of pre-impregnated reinforcement fibers 10 that were wound on spools, which were exchanged before being depleted. The method thus allows utilizing pre-impregnated reinforcement fibers 10 that would otherwise be disposed. The powdering of the pre-impregnated reinforcement fibers 10 allows processing them, e.g. by cutting into pieces of substantially uniform size and mixing these pieces with additives used in the manufacture of bulk moulding compounds or sheet moulding compounds.

The cutting in the above-described methods may for example be performed with a cutting knife 24.

In all the above-described methods, the excess powdery substance that was powdered onto the pre-impregnated reinforcement fibers 10, but did not adhere thereto, can be collected and be reused in a next powdering step or during the compounding of the powdered pre-impregnated reinforcement fibers 10 with additives.

A composite material is prepared by a method as described above. The composite material is preferably a part that is used in an aircraft.

### Example 1

500 g prepreg (60 vol% fibre, 40 vol% resin) was powdered with 50 g calcium carbonate and cut into prepreg strips of 12 mm length. Resin and rest of the powder substance was mixed, i.e. 200 g powder and 300 g resin. The pre-mixed resin and additive were kneaded with the cut prepreg in order to obtain 1 kg of bulk moulding compound containing 500 g prepreg (60/40 fibre/resin), 250g of powder additive and 250g of additional resin.

## Claims

1. A method for producing a bulk moulding compound or a sheet moulding compound from pre-impregnated reinforcement fibers (10), comprising a step of
- powdering a powdery substance (12) that prevents sticking together of pre-impregnated reinforcement fibers (10) on at least one surface of laminates of pre-impregnated reinforcement fibers (10), and
- cutting the powdered laminates of pre-impregnated reinforcement fibers (10) into a plurality of cut laminates (14).

2. The method for producing a bulk moulding compound or a sheet moulding compound from pre-impregnated reinforcement fibers (10) according to claim 1, comprising the steps of
- stacking a plurality of laminates of pre-impregnated reinforcement fibers into a stack (16),
- powdering the powdery substance (12) on at least one surface (18) of the stack (16), and
- cutting the powdered stack into a plurality of cut stacks (20).

3. The method for producing a bulk moulding compound or a sheet moulding compound from pre-impregnated reinforcement fibers (10) according to claim 1 or 2, further comprising a step of:
- powdering the powdery substance (12) on at least one surface of the plurality of cut laminates (14) or cut stacks (20).

4. The method for producing a bulk moulding compound or a sheet moulding compound from pre-impregnated reinforcement fibers (10) according to any one of claims 1 to 3, further comprising a step of:
- compounding the cut laminates (14) or cut stacks (20) with additives (22).

5. The method for producing a bulk moulding compound or a sheet moulding compound from pre-impregnated reinforcement fibers (10) according to any one of claims 1 to 4, wherein the powdery substance (12) comprises compounding additives (22).

6. The method for producing a bulk moulding compound or a sheet moulding compound from pre-impregnated reinforcement fibers (10) according to any one of claims 1 to 5, wherein the powdery substance (12) comprises calcium carbonate, aluminum trihydrate or magnesium hydroxide.

7. The method for producing a bulk moulding compound or a sheet moulding compound from pre-impregnated reinforcement fibers (10) according to any one of claims 1 to 6, wherein the bulk moulding compound or the sheet moulding compound is moulded into a composite material.

8. The method for producing a bulk moulding compound or a sheet moulding compound from pre-impregnated reinforcement fibers (10) according to claim 7, comprising the steps of
- powdering the powdery substance (12) that prevents sticking together of pre-impregnated reinforcement fibers (10) on at least one surface of laminates of pre-impregnated reinforcement fibers (10),
- cutting the powdered laminates into a plurality of cut laminates (14),
- optionally, powdering the powdery substance (12) on at least one surface of the plurality of cut laminates (14),
- compounding the cut laminates (14) with additives (22),
- moulding the compounded cut laminates.

9. The method for producing a bulk moulding compound or a sheet moulding compound from pre-impregnated reinforcement fibers (10) according to claim 7, comprising the steps of
- stacking a plurality of laminates of pre-impregnated reinforcement fibers into a stack (16),
- powdering the powdery substance (12) on at least one surface of at least one surface (18) of the stack (16),
- cutting the powdered stack into a plurality of cut stacks (20),
- optionally, powdering the powdery substance (18) on at least one surface of the plurality of cut stacks (20),
- compounding the cut stacks (20) with additives (22),
- moulding the compounded cut stacks.

10. A bulk moulding compound or a sheet moulding compound produced by a method according to any one of claims 1 to 6.

11. The bulk moulding compound or a sheet moulding compound according to claim 10, comprising 10-50% by volume fibres, 20-60% by volume resin or polymer and 10-50% by volume additives.

12. A method for utilizing the remainder of pre-impregnated reinforcement fibers comprising a step of producing a bulk moulding compound or a sheet moulding compound from pre-impregnated reinforcement fibers (10) according to any one of claims 1 to 6 or producing a composite material with a method according to any one of claims 7 to 9.

## Patentansprüche

1. Verfahren zur Herstellung eines Bulk Moulding Compounds oder eines Sheet Moulding Compounds aus vorimprägnierten Verstärkungsfasern (10), umfassend einen Schritt des
- Stäubens einer pulverigen Substanz (12), welche Zusammenkleben der vorimprägnierten Verstärkungsfasern (10) verhindert, auf mindestens eine Oberfläche von Laminaten von vorimprägnierten Verstärkungsfasern (10), und
- Schneidens der pulverbestäubten Laminate der vorimprägnierten Verstärkungsfasern (10) zu einer Vielzahl von geschnittenen Laminaten (14).

2. Verfahren zur Herstellung eines Bulk Moulding Compounds oder eines Sheet Moulding Compounds aus vorimprägnierten Verstärkungsfasern (10) nach Anspruch 1, umfassend die Schritte des
- Stapelns einer Vielzahl von Laminaten der vorimprägnierten Verstärkungsfasern zu einem Stapel (16),
- Stäubens der pulverigen Substanz (12) auf mindestens eine Oberfläche (18) des Stapels (16), und
- Schneidens des pulverbestäubten Stapels zu einer Vielzahl von geschnittenen Stapeln (20).

3. Verfahren zur Herstellung eines Bulk Moulding Compounds oder eines Sheet Moulding Compounds aus vorimprägnierten Verstärkungsfasern (10) nach Anspruch 1 oder 2, des Weiteren umfassend einen Schritt des
- Stäubens der pulverigen Substanz (12) auf mindestens eine Oberfläche von der Vielzahl der geschnittenen Laminate (14) oder geschnittenen Stapel (20).

4. Verfahren zur Herstellung eines Bulk Moulding Compounds oder eines Sheet Moulding Compounds aus vorimprägnierten Verstärkungsfasern (10) nach einem der Ansprüche 1 bis 3, des Weiteren umfassend einen Schritt des:
- Compoundierens der geschnittenen Laminate (14) oder geschnittenen Stapel (20) mit Additiven (22).

5. Verfahren zur Herstellung eines Bulk Moulding Compounds oder eines Sheet Moulding Compounds aus vorimprägnierten Verstärkungsfasern (10) nach einem der Ansprüche 1 bis 4, wobei die pulverige Substanz (12) Compoundieradditive (22) umfasst.

6. Verfahren zur Herstellung eines Bulk Moulding Compounds oder eines Sheet Moulding Compounds aus vorimprägnierten Verstärkungsfasern (10) nach einem der Ansprüche 1 bis 5, wobei die pulverige Substanz (12) Calciumcarbonat, Aluminiumtrihydrat oder Magnesiumhydroxid umfasst.

7. Verfahren zur Herstellung eines Bulk Moulding Compounds oder eines Sheet Moulding Compounds aus vorimprägnierten Verstärkungsfasern (10) nach einem der Ansprüche 1 bis 6, wobei das Bulk Moulding Compound oder das Sheet Moulding Compound zu einem Verbundmaterial geformt wird.

8. Verfahren zur Herstellung eines Bulk Moulding Compounds oder eines Sheet Moulding Compounds aus vorimprägnierten Verstärkungsfasern (10) nach Anspruch 7, umfassend die Schritte des
- Stäubens der pulverigen Substanz (12), welche Zusammenkleben der vorimprägnierten Verstärkungsfasern (10) verhindert, auf mindestens eine Oberfläche von Laminaten von vorimprägnierten Verstärkungsfasern (10),
- Schneidens der pulverbestäubten Laminate zu einer Vielzahl von geschnittenen Laminaten (14),
- gegebenenfalls Stäubens der pulverigen Substanz (12) auf mindestens eine Oberfläche von der Vielzahl der geschnittenen Laminate (14),
- Compoundierens der geschnittenen Laminate (14) mit Additiven (22),
- Formens der compoundierten geschnittenen Laminate.

9. Verfahren zur Herstellung eines Bulk Moulding Compounds oder eines Sheet Moulding Compounds aus vorimprägnierten Verstärkungsfasern (10) nach Anspruch 7, umfassend die Schritte des
- Stapelns einer Vielzahl von Laminaten der vorimprägnierten Verstärkungsfasern zu einem Stapel (16),
- Stäubens der pulverigen Substanz (12) auf mindestens eine Oberfläche von mindestens einer Oberfläche (18) des Stapels (16),
- Schneidens des pulverbestäubten Stapels zu einer Vielzahl von geschnittenen Stapeln (20),
- gegebenenfalls Stäubens der pulverigen Substanz (18) auf mindestens eine Oberfläche von der Vielzahl der geschnittenen Stapel (20),
- Compoundierens der geschnittenen Stapel (20) mit Additiven (22),
- Formens der compoundierten geschnittenen Stapel.

10. Bulk Moulding Compound oder Sheet Moulding Compound, das nach einem Verfahren gemäß einem der Ansprüche 1 bis 6 hergestellt ist.

11. Bulk Moulding Compound oder Sheet Moulding Compound nach Anspruch 10, umfassend 10 bis 50 Vol.% Fasern, 20 bis 60 Vol.% Harz oder Polymer und 10 bis 50 Vol.% Additive.

12. Verfahren zum Nutzen des Restes der vorimprägnierten Verstärkungsfasern, umfassend einen Schritt des Herstellens eines Bulk Moulding Compounds oder eines Sheet Moulding Compounds aus vorimprägnierten Verstärkungsfasern (10) nach einem der Ansprüche 1 bis 6 oder Herstellens eines Verbundmaterials mit einem Verfahren gemäß einem der Ansprüche 7 bis 9.

## Revendications

1. Procédé de production d'un préimprégné en vrac ou d'un préimprégné en feuille à partir de fibres de renforcement préimprégnées (10), comprenant une étape de
- poudrage d'une substance pulvérulente (12) qui empêche des fibres de renforcement préimprégnées (10) de coller entre elles sur au moins une surface de stratifiés de fibres de renforcement préimprégnées (10), et
- découpe des stratifiés de fibres de renforcement préimprégnées (10) poudrés en une pluralité de stratifiés découpés (14).

2. Procédé de production d'un préimprégné en vrac ou d'un préimprégné en feuille à partir de fibres de renforcement préimprégnées (10) selon la revendication 1, comprenant les étapes suivantes :
- empilement d'une pluralité de stratifiés de fibres de renforcement préimprégnées en un empilement (16),
- poudrage de la substance pulvérulente (12) sur au moins une surface (18) de l'empilement (16), et
- découpe de l'empilement poudré en une pluralité d'empilements découpés (20).

3. Procédé de production d'un préimprégné en vrac ou d'un préimprégné en feuille à partir de fibres de renforcement préimprégnées (10) selon la revendication 1 ou 2, comprenant en outre une étape de :
- poudrage de la substance pulvérulente (12) sur au moins une surface de la pluralité de stratifiés découpés (14) ou d'empilements découpés (20).

4. Procédé de production d'un préimprégné en vrac ou d'un préimprégné en feuille à partir de fibres de renforcement préimprégnées (10) selon l'une quelconque des revendications 1 à 3, comprenant en outre une étape de :
- mélange des stratifiés découpés (14) ou des empilements découpés (20) avec des additifs (22).

5. Procédé de production d'un préimprégné en vrac ou d'un préimprégné en feuille à partir de fibres de renforcement préimprégnées (10) selon l'une quelconque des revendications 1 à 4, dans lequel la substance pulvérulente (12) comprend des additifs de mélange (22).

6. Procédé de production d'un préimprégné en vrac ou d'un préimprégné en feuille à partir de fibres de renforcement préimprégnées (10) selon l'une quelconque des revendications 1 à 5, dans lequel la substance pulvérulente (12) comprend du carbonate de calcium, du trihydrate d'aluminium ou de l'hydroxyde de magnésium.

7. Procédé de production d'un préimprégné en vrac ou d'un préimprégné en feuille à partir de fibres de renforcement préimprégnées (10) selon l'une quelconque des revendications 1 à 6, dans lequel le préimprégné en vrac ou le préimprégné en feuille est moulé en un matériau composite.

8. Procédé de production d'un préimprégné en vrac ou d'un préimprégné en feuille à partir de fibres de renforcement préimprégnées (10) selon la revendication 7, comprenant les étapes de
- poudrage de la substance pulvérulente (12) qui empêche des fibres de renforcement préimprégnées (10) de coller entre elles sur au moins une surface de stratifiés de fibres de renforcement préimprégnées (10),
- découpe des stratifiés poudrés en une pluralité de stratifiés découpés (14),
- éventuellement, poudrage de la substance pulvérulente (12) sur au moins une surface de la pluralité de stratifiés découpés (14),
- mélange des stratifiés découpés (14) avec des additifs (22),
- moulage des stratifiés découpés mélangés.

9. Procédé de production d'un préimprégné en vrac ou d'un préimprégné en feuille à partir de fibres de renforcement préimprégnées (10) selon la revendication 7, comprenant les étapes suivantes :
- empilement d'une pluralité de stratifiés de fibres de renforcement préimprégnées en un empilement (16),
- poudrage de la substance pulvérulente (12) sur au moins une surface d'au moins une surface (18) de l'empilement (16),
- découpe de l'empilement poudré en une pluralité d'empilements découpés (20),
- éventuellement, poudrage de la substance pulvérulente (18) sur au moins une surface de la pluralité d'empilements découpés (20),
- mélange des empilements découpés (20) avec des additifs (22),
- moulage des empilements découpés mélangés.

10. Préimprégné en vrac ou préimprégné en feuille produit par un procédé selon l'une quelconque des revendications 1 à 6.

11. Préimprégné en vrac ou préimprégné en feuille selon la revendication 10, comprenant 10-50 % en volume de fibres, 20-60 % en volume de résine ou de polymère et 10-50 % en volume d'additifs.

12. Procédé d'utilisation du reste de fibres de renforcement préimprégnées comprenant une étape de production d'un préimprégné en vrac ou d'un préimprégné en feuille à partir de fibres de renforcement préimprégnées (10) selon l'une quelconque des revendications 1 à 6 ou de production d'un matériau composite avec un procédé selon l'une quelconque des revendications 7 à 9.
